# EUROPÄISCHE PATENTANMELDUNG

(11) **EP 1 400 714 A2**
(43) Veröffentlichungstag der Anmeldung: **24.03.2004**
(21) Anmeldenummer: 03020981.1
(22) Anmeldetag: 17.09.2003
(51) Int. Cl.: F16D 13/58

(54) **Auslöseranordnung für eine Reibungskupplung**

(30) Priorität: 21.09.2002 DE 10243991
(71) Anmelder: Sachs Race Engineering GmbH, 97424 Schweinfurt (DE)
(72) Erfinder: Friedrich, Horst, 97491 Aidhausen (DE); Huisjes, Arnold, 97424 Schweinfurt (DE); Selzam, Werner, 97537 Wipfeld (DE); Pankoke, Jörg, 71229 Leonberg (DE)

(57) **Zusammenfassung**

Eine Auslöseranordnung für eine Reibungskupplung umfasst wenigstens ein an einem Kupplungsgehäuse (10) vorgesehenes Auslöserelement (18), das zur Erzeugung von mit der Drehbewegung des Kupplungsgehäuses (10) um eine Drehachse in Zusammenhang stehender Information mit einer Aufnehmeranordnung zusammenwirken kann, wobei das wenigstens eine Auslöserelement (18) von dem Kupplungsgehäuse (10) getrennt ausgebildet ist und mit diesem fest verbunden oder verbindbar ist.

## Beschreibung

Die vorliegende Erfindung betrifft eine Auslöseranordnung für eine Reibungskupplung, umfassend wenigstens ein an einem Kupplungsgehäuse vorgesehenes Auslöserelement, das zur Erzeugung von mit der Drehbewegung des Kupplungsgehäuses in Zusammenhang stehender Information mit einer Aufnehmeranordnung zusammenwirken kann.

In Kraftfahrzeugen wird zur Ansteuerung verschiedener Systemkomponenten Information benötigt, die mit der Drehzahl des Antriebsaggregats oder ggf. auch der Drehlage einer Kurbelwelle desselben in Zusammenhang steht. Es werden daher im Allgemeinen magnetisch wirksame Aufnehmer eingesetzt, die eine Auslöserformation an einem Kupplungsgehäuse abtasten. Da bei Kupplungen im Allgemeinen die Kupplungsgehäuse als Stahlbauteile bereitgestellt werden, ebenso wie Schwungräder oder dergleichen, können Vorsprungsformationen, die mit einem magnetischen Aufnehmer zusammenwirken, integral an diese Gehäuse oder Schwungräder angeformt werden. Insbesondere im Rennsportbereich, zunehmend aber auch bei konventionell genutzten Kraftfahrzeugen, besteht der Wunsch, möglichst leichte Bauteile einzusetzen, was beispielsweise dazu führt, dass auch im Kupplungsbereich Bauteile aus nicht magnetischem bzw. nicht magetisierbarem Material eingesetzt werden. Aber auch beim Aufbau derartiger Bauteile aus grundsätzlich magnetisierbarem Material, wie z.B. Stahl, besteht das Problem, dass durch integrales Anformen der Auslöseranordnung eine Auswirkung auf andere Bereiche dieser Bauteile besteht bzw. dass eine Auslöseranordnung nur mit begrenzter Genauigkeit angeformt werden kann, beispielsweise bei Durchführung eines Umformungsvorgangs eines Blechmaterials.

Es ist die Aufgabe der vorliegenden Erfindung, eine Auslöseranordnung für eine Reibungskupplung vorzusehen, welche bei einfachem und zu präziser Erfassung geeignetem Aufbau im Wesentlichen unabhängig vom Aufbau anderer Kupplungskomponenten einsetzbar ist.

Erfindungsgemäß wird diese Aufgabe gelöst durch eine Auslöseranordnung für eine Reibungskupplung, umfassend wenigstens ein an einem Kupplungsgehäuse vorgesehenes Auslöserelement, das zur Erzeugung von mit der Drehbewegung des Kupplungsgehäuses um eine Drehachse in Zusammenhang stehender Information mit einer Aufnehmeranordnung zusammenwirken kann, wobei das wenigstens eine Auslöserelement von dem Kupplungsgehäuse getrennt ausgebildet ist und mit diesem fest verbunden oder verbindbar ist.

Durch das separate Ausbilden des wenigstens einen Auslöserelements kann dieses zum einen aus geeignetem Material unabhängig vom Aufbaumaterial des Kupplungsgehäuses hergestellt werden. Des Weiteren kann es auch unabhängig vom Herstellungsvorgang des Kupplungsgehäuses und vor allem auch im Wesentlichen unabhängig von dessen Formgebung hergestellt werden.

Bei der vorliegenden Erfindung kann vorzugsweise vorgesehen sein, dass in Umfangsrichtung um die Drehachse aufeinander folgend mehrere Auslöserelemente vorgesehen sind. Hier kann eine baulich sehr einfach zu realisierende Ausgestaltungsform vorsehen, dass die Auslöserelemente an einem mit dem Kupplungsgehäuse verbundenen oder verbindbaren Auslöserring ausgebildet sind. Aus Gewichtsgründen kann es jedoch vorteilhaft sein, wenn die Auslöserelemente einzeln oder in Auslöserelementengruppen mit dem Kupplungsgehäuse verbunden oder verbindbar sind. Es entfällt somit zumindest ein Teil von einzelne Auslöserelemente verbindenden Ringabschnitten.

Um vor allem bei der separaten bzw. gruppenweisen Ausgestaltung der Auslöserelemente eine geeignete Abstützung derselben gegen Fliehkrafteinwirkung bereitstellen zu können, wird vorgeschlagen, dass die Auslöserelemente oder Auslöserelementengruppen einen Eingriffsvorsprung aufweisen, der mit einem zugeordneten Gegen-Eingriffsvorsprung am Kupplungsgehäuse in radial formschlüssig wirkenden Eingriff bringbar ist. Auf diese Art und Weise wird gleichzeitig auch noch für eine erhöhte Lagepositionierungsgenauigkeit im Bereich der Auslöserelemente gesorgt.

Die Auslöserelemente können mit dem Kupplungsgehäuse durch Verschraubung oder Vernietung verbunden oder verbindbar sein.

Das Gehäuse kann beispielsweise aus Gewichtsgründen aus nicht magnetisierbarem Material, wie z.B. Titan, ausgebildet sein. Die Auslöserelemente können vor allem zur Zusammenwirkung mit einem magnetisch wirksamen Aufnehmer aus magnetisierbarem Material, wie z.B. Stahl oder dergleichen, ausgebildet sein.

Die vorliegende Erfindung betrifft ferner eine Reibungskupplung mit einer erfindungsgemäßen Auslöseranordnung.

Nachfolgend wird die Erfindung mit Bezug auf die beiliegenden Zeichnungen detailliert beschrieben. Es zeigt:
- Fig. 1: eine perspektivische Ansicht eines Kupplungsgehäuses mit einer Mehrzahl von separat ausgebildeten Auslöserelementen;
- Fig. 2: eine Teil-Längsschnittansicht der in Fig. 1 gezeigten Anordnung im Bereich der Verbindung des Kupplungsgehäuses mit einem Auslöserelement;
- Fig. 3: eine der Fig. 1 entsprechende Ansicht einer alternativen Ausgestaltungsform.

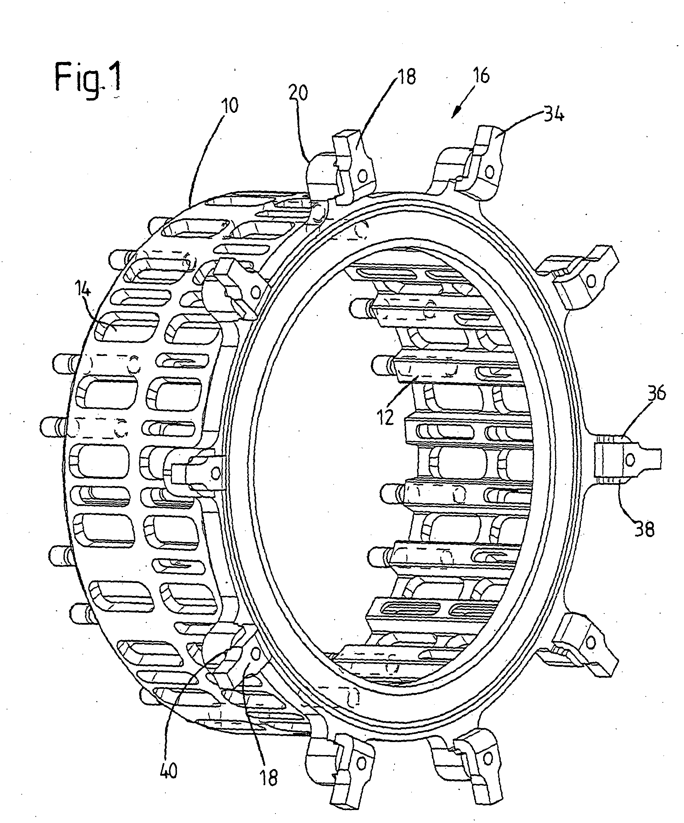

In Fig. 1 ist ein Gehäuse einer Reibungskupplung mit 10 bezeichnet. Das Gehäuse 10 ist im Wesentlichen ringartig ausgebildet und weist an einer Mehrzahl von Umfangspositionen nach radial innen greifende Vorsprünge 12 auf, die in entsprechende Aussparungen von Lamellen einer das Gehäuse umfassenden Reibungskupplung eingreifen. Auf diese Art und Weise können mehrere Lamellen mit dem Gehäuse 10 zur gemeinsamen Drehung gekoppelt werden, während sie gleichzeitig in begrenztem Ausmaß in Richtung einer Drehachse bezüglich des Gehäuses 10 bewegbar sind. Derartige Lamellenkupplungen werden beispielsweise im Rennsportbereich eingesetzt und weisen den wesentlichen Vorteil auf, dass sie auf vergleichsweise kleinem Bauraum eine sehr große gesamte reibend wirksam werdende Oberfläche bereitstellen. Aus Gründen der Gewichtsersparnis sind in dem Gehäuse 10 mehrere Aussaprungen 14 vorgesehen. Weiterhin kann vorzugsweise das Gehäuse 10 auch aus sehr leichtem Werkstoff, wie z.B. Titan, gefertigt werden, das gleichzeitig eine ausreichende Festigkeit aufweist.

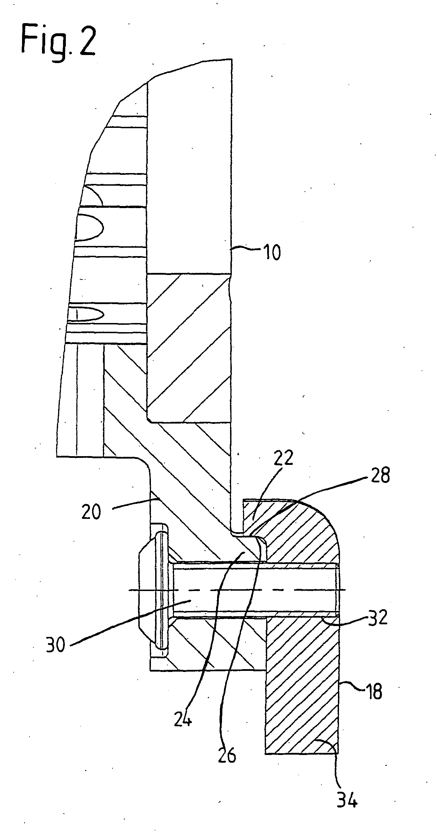

Um bei einer Reibungskupplung, die ein Gehäuse 10, wie es in Fig. 1 dargestellt ist, aufweist, Information über die Drehbewegung, insbesondere die Drehzahl auch eines mit dem Gehäuse 10 fest gekoppelten Antriebsaggregats erlangen zu können, ist eine allgemein mit 16 bezeichnete Auslöseranordnung vorhanden. Diese umfasst in dem in den Figuren 1 und 2 gezeigten Beispiel mehrere in Umfangsrichtung um eine Drehachse aufeinander folgend angeordnete Auslöserelemente 18. In Zuordnung zu jedem Auslöserelement 18 ist am Gehäuse 10 ein Kopplungsbereich 20 nach radial außen greifend vorgesehen. Wie man in der Schnittdarstellung der Fig. 2 erkennt, sind die Auslöserelemente 18 an ihrem radial inneren Endbereich mit einem sich im Wesentlichen axial erstreckenden Eingriffsvorsprung 22 ausgebildet. Die Kopplungsbereiche 20 weisen diesen Eingriffsvorsprüngen 22 zugeordnet jeweils einen Gegen-Eingriffsvorsprung 24 auf. Mit einander im Wesentlichen radial gegenüber liegenden Oberflächen 26, 28 liegen der Eingriffsvorsprung 22 und der Gegen-Eingriffsvorsprung 24 aneinander an. Es ist durch diese Art der in Radialrichtung formschlüssig wirkenden Kopplung zum einen eine Abstützung der Auslöserelemente 18 in radialer Richtung vorgesehen. Zum anderen bewirken die beiden aneinader anliegenden Oberflächen 26, 28 eine sehr genaue Lagepositionierung der Auslöserelemente 18.

Zur festen Kopplung der Auslöserelemente 18 mit dem Gehäuse 10 sind durch die Kopplungsbereiche 20 hindurch Schraubbolzen 30 geführt, die in Innengewindeöffnungen 32 der Auslöserelemente 18 eingreifen. Hier könnte beispielsweise an Stelle der Verschraubung auch eine Nietverbindung vorgesehen sein.

Die Auslöserelemente 18 sind bei einer bevorzugten Ausgestaltungsform aus magnetisierbarem Material, wie z.B. aus Stahlmaterial, aufgebaut und erzeugen bei der Vorbeibewegung an einem geeignet positionierten Aufnehmer einen Impuls. Durch die zeitliche Abfolge der Impulse kann auf die Drehzahl geschlossen werden. Weiter könnte bei geeigneter Formgebung von zumindest einem der Auslöserelemente 18 auf die Drehlage geschlossen werden, beispielsweise dadurch, dass periodisch ein Impuls mit anderer Form auftritt. Es sei darauf hingewiesen, dass selbstverständlich auch andere Impulsgeber eingesetzt werden können. So könnten die Auslöserelemente 18 auch optisch abgetastet werden, um durch periodische Reflexion oder periodische Abdeckung eines Lichtaufnehmers ein entsprechendes Signal zu generieren.

Da die Auslöserelemente 18 sich mit ihren zur Wechselwirkung mit einem Aufnehmer vorgesehenen Auslöserabschnitten 34 vergleichsweise weit nach radial außen erstrecken können, und zwar im Wesentlichen unabhängig von der konkreten Formgebung des Gehäuses 10 an sich, besteht auch bei der Positionierung der mit den Auslöserelementen 18 zusammenwirkenden Aufnehmern eine größere Freiheit.

Durch das erfindungsgemäße Bereitstellen der Auslöserelemente 18 der Auslöseranordnung 16 als vom Gehäuse 10 separat ausgebildete Bauteile besteht nicht nur bei der Auswahl der jeweils einzusetzenden Materialien eine größere Freiheit, so dass Gehäuse einerseits und Auslöserelemente andererseits aus für die speziell bestehenden Anforderungen jeweils optimierten Wekstoffen aufgebaut werden können, sondern auch bei der Fertigung vor allem des Gehäuses 10 besteht eine weitaus weniger starke Beschränkung dadurch, dass eine speziell geformte Auslöseranordnung bereitgestellt werden muss. Dabei sei darauf hingewiesen, dass nicht notwendigerweise die Auslöserelemente 18 radial über das Gehäuse 10 überstehen müssen. Beispielsweise bei Positionierung eines Aufnehmers in axialer Folge auf das Gehäuse 10 bilden die beispielsweise aus magnetisierbarem Stahlmaterial aufgebauten Auslöserelement 18 an einem aus nicht magnetisierbarem Material dann aufgebauten Gehäuse 10 sich periodisch an dem Aufnehmer vorbeibewegende Bereiche, die zur Erzeugung eines die Drehzahl und ggf. auch die Drehlage repräsentierenden Signals führen können. Insofern müssen nicht notwendigerweise die in der Fig. 1 erkennbaren Kopplungsbereiche 20 als nach radial außen überstehende Kopplungsbereiche ausgebildet sein. Vielmehr könnten diese auch in axialer Flucht zu dem im Wesentlichen ringartigen Gehäuse ausgebildet sein.

Um vor allem in der Umfangsrichtung die für die Drehzahl bzw. Lageerfassung hohe Präzision erlangen zu können, sind an den Kopplungsbereichen 20 beidseits eines jeweiligen Auslöserelements 18 Umfangsabstützungen 36, 38 ausgebildet, die zwischen sich eine Aussparung 40 zur im Wesentlichen spielfreien Aufnahme eines jeweiligen Auslöserelements 18 bilden. Es ist somit nicht nur in radialer Richtung, sondern auch in Umfamgsrichtung für eine sehr genaue Positionierung der Auslöserelemente an dem Gehäuse 10 gesorgt.

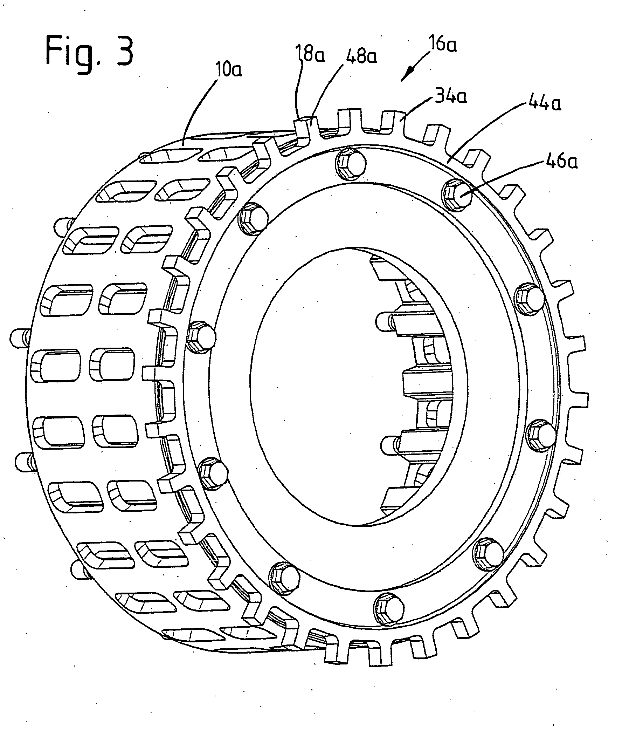

In Fig. 3 ist eine alternative Ausgestaltungsform gezeigt, bei welcher Komponenten, die vorangehend beschriebenen Komponenten in Aufbau bzw. Funktion entsprechen, mit dem gleichen Bezugszeichen unter Hinzufügung eines Anhangs "a" bezeichnet sind.

Die Auslöseranordnung 16a umfasst hier einen Auslöserring 44a, der durch eine Mehrzahl von Schraubbolzen 46a oder Nietbolzen oder dergleichen an einer Stirnwand des Gehäuses 10a festlegbar ist und der an seinem Außenumfangsbereich, ggf. auch an einer Stirnseite, nach radial außen bzw. ggf. dann in Achrichtung abstehende Vorsprünge 48a trägt, die dann die Auslöserelemente 18a bilden. D.h., die mehreren in Umfangsrichtung aufeinander folgenden Auslöserelemente sind an einem ringartigen Bauteil vorgesehen, was zum einen die Lagepräzision der Auslöserelemente 18a bezüglich einander noch erhöht und zum anderen gleichzeitig auch für eine stabile Radialabstützung derselben sorgt. Es sei hier darauf hingewiesen, dass selbstverständlich auch Auslöserelemente zu Gruppen zusammengefasst sein können und dann gruppenweise, also nicht in durchgehender Ringkontur, am Gehäuse festgelegt werden können. Auch bei der in Fig. 3 gezeigten Ausgestaltungsvariante müssen nicht notwendigerweise die Auslöserelemente 18 bzw. deren zur Wechselwirkung mit einem Aufnehmer wirksame Auslöserabschnitte 34a nach radial außen über das Gehäuse 10a überstehen. Wie bereits ausgeführt, könnte auch eine axial vorstehende Anordnung von Auslöserelementen 18a bereitgestellt sein.

Es sei weiter darauf hingewiesen, dass, je nach Ausgestaltung des Gehäuses, die Auslöserelemente bzw. die an einem Ring oder Ringabschnitt vorgesehenen Auslöserelemente an der dem Motor zugewandt zu positionierenden Seite des Gehäuses oder an der dem Getriebe zugewandt zu positionierenden Seite des Gehäuses vorgesehen sein können. Beispielsweise ist es auch möglich, dass der vorangehend beschriebene Auslöserring bzw. die vorangehend beschriebenen Auslöserelemente an einem Gehäusedeckel ausgebildet oder vorzusehen sind, der das beispielsweise in der Fig. 1 gezeigte Gehäuse abschließt und an dem beispielsweise ein Kraftspeicher abgestützt ist. Beispielsweise kann dabei der in Fig. 3 erkennbare Auslöserring 44a einen derartigen Gehäusedeckel, im Sinne der vorliegenden Erfindung also auch ein Gehäusebauteil, ersetzen. Bei getriebenah positioniertem Gehäusedeckel ergibt sich daraus der Vorteil, dass die Auslöserelemente und mit diesen auch die entsprechenden Sensoren weiter vom Motor entfernt positioniert werden können. Grundsätzlich ist es jedoch auch bei einer derartigen Ausgestaltung möglich, eine derartige Kupplung so in einen Antriebsstrang einzubauen, dass der Gehäusedeckel zusammen mit den daran vorgesehenen Auslöserelementen motornah positioniert ist. Grundsätzlich könnten beispielsweise auch bei der Ausgestaltungsform gemäß Fig. 1 die die einzelnen Auslöserelemente tragenden Kopplungsbereiche in einem mehr mittig - betrachtet in axialer Richtung - liegenden Bereich des Gehäuses positioniert sein.

## Patentansprüche

1. Auslöseranordnung für eine Reibungskupplung, umfassend wenigstens ein an einem Kupplungsgehäuse (10; 10a) vorgesehenes Auslöserelement (18; 18a), das zur Erzeugung von mit der Drehbewegung des Kupplungsgehäuses (10; 10a) um eine Drehachse in Zusammenhang stehender Information mit einer Aufnehmeranordnung zusammenwirken kann, wobei das wenigstens eine Auslöserelement (18; 18a) von dem Kupplungsgehäuse (10; 10a) getrennt ausgebildet ist und mit diesem fest verbunden oder verbindbar ist.

2. Auslöseranordnung nach Anspruch 1,
**dadurch gekennzeichnet, dass** in Umfangsrichtung um die Drehachse aufeinanderfolgend mehrere Auslöserelemente (18; 18a) vorgesehen sind.

3. Auslöseranordnung nach Anspruch 2,
**dadurch gekennzeichnet, dass** die Auslöserelemente (18a) an einem mit dem Kupplungsgehäuse (10a) verbundenen oder verbindbaren Auslöserring (44a) ausgebildet sind.

4. Auslöseranordnung nach Anspruch 2,
**dadurch gekennzeichnet, dass** die Auslöserelemente (18) einzeln oder in Auslöserelementengruppen mit dem Kupplungsgehäuse (10) verbunden oder verbindbar sind.

5. Auslöseranordnung nach Anspruch 4,
**dadurch gekennzeichnet, dass** die Auslöserelemente (18) oder Auslöserelementengruppen einen Eingriffsvorsprung (22) aufweisen, der mit einem zugeordneten Gegen-Eingriffsvorsprung (24) am Kupplungsgehäuse (10) in radial formschlüssig wirkenden Eingriff steht oder bringbar ist.

6. Auslöseranordnung nach einem der Ansprüche 1 bis 5,
**dadurch gekennzeichnet, dass** das wenigstens eine Auslöserelement (18; 18a) mit dem Kupplungsgehäuse (10; 10a) durch Verschraubung oder Vernietung verbunden oder verbindbar ist.

7. Auslöseranordnung nach einem der Ansprüche 1 bis 6,
**dadurch gekennzeichnet, dass** das Kupplungsgehäuse (10; 10a) aus nicht magnetiserbarem Material, vorzugsweise Titan, gebildet ist und dass das wenigstens eine Auslöserelement (18; 18a) aus magentisierbarem Material, vorzusgweise Stahl, gebildet ist.

8. Reibungskupplung, umfassend eine Auslöseranordnung (16; 16a) nach einem der vorangehenden Ansprüche.
